# FASCICULE DE BREVET EUROPEEN

(11) **EP 1 857 328 B1**
(45) Date de publication et mention de la délivrance du brevet: **13.07.2011**
(21) Numéro de dépôt: 07108360.4
(22) Date de dépôt: 16.05.2007
(51) Int. Cl.: B60R 19/18, B60K 11/04

(54) **Agencement d'un radiateur, d'un absorbeur et d'une poutre de chocs sur un véhicule automobile**
Anordnung eines Kühlers, eines Dämpfers und einer Stoßstange für ein Kraftfahrzeug
Arrangement of a radiator, an absorber and a crash beam on an automobile vehicle

(30) Priorité: 19.05.2006 FR 0604511
(43) Date de publication de la demande: 21.11.2007
(73) Titulaire: Compagnie Plastic Omnium, 69007 Lyon (FR)
(72) Inventeur: Ginja, Stéphane, 01500, AMBERIEU EN BUGEY (FR); Gilotte, Philippe, 01470, BENONCES (FR)
(74) Mandataire: Remy, Vincent Noel Paul

(56) Documents cités:
- EP-A- 0 236 216
- EP-A- 1 118 530
- DE-A- 3 636 030
- DE-A- 19 911 832
- FR-A- 2 445 783
- FR-A- 2 553 826
- FR-A- 2 852 569

## Description

### Domaine technique

La présente invention concerne un agencement d'un radiateur, d'un absorbeur et d'une poutre de chocs sur un véhicule automobile.

### Etat de la technique

Dans un véhicule automobile, on sait qu'un radiateur est généralement positionné dans le bloc avant en retrait des extrémités avant des longerons et derrière la poutre de chocs rigide, de façon à être protégé en cas de chocs. Le radiateur s'étend en hauteur au-dessus et en-dessous de la poutre de chocs.

Sur les véhicules traditionnels, des absorbeurs appelés « crash boxes » sont prévus entre l'extrémité des longerons et la poutre de chocs, le radiateur se retrouve donc en arrière à une certaine distance de la poutre, grâce à la profondeur des crash boxes. Un espace est donc créé entre le radiateur et la poutre de chocs, si bien que cette dernière ne présente pas un trop gros obstacle pour que l'air entrant par une ouverture d'entrée prévue à l'avant du véhicule s'écoule vers toute la surface du radiateur, même si l'ouverture d'entrée d'air est plus petite que la surface du radiateur. Ainsi, l'air contourne la poutre de chocs et peut alimenter toute la surface du radiateur, notamment les surfaces situées en regard de la poutre de chocs et, le cas échéant, à une hauteur différente de la hauteur de l'ouverture d'entrée d'air.

### Problème posé par cet état de la technique

Il pourrait être intéressant de monter la poutre directement sur les longerons. Ceci permettrait une meilleure répartition des efforts reçus par la poutre rigide entre les longerons.

Mais dans ce cas, deux problèmes se poseraient.

Tout d'abord, il n'y aurait que très peu d'espace entre la poutre de chocs et le radiateur, si bien que l'air entrant par l'avant du véhicule n'aurait pas la place pour contourner la poutre de chocs afin d'alimenter les surfaces du radiateur qui ne se trouvent pas directement en regard de l'ouverture d'entrée d'air. Ainsi, une telle configuration nuirait au bon refroidissement du radiateur, dont toute une partie ne serait pas alimentée en air.

En outre, la fonction des crash boxes ne serait pas remplie et l'énergie des chocs serait directement transmise aux châssis du véhicule.

DE 19911832 A divulgue un ensemble d'un radiateur, d'un absorbeur et d'une poutre de chocs pour véhicule automobile.

### Solution proposée par l'invention

L'invention vise à fournir un agencement autorisant la configuration proposée ci-dessus, tout en assurant à la fois une bonne alimentation en air de la surface du radiateur et une bonne absorption des chocs.

A cet effet, l'invention a pour objet un ensemble d'un radiateur, d'un absorbeur et d'une poutre de chocs selon la revendication 1.

Dans la suite, on entend par poutre de chocs une structure rigide s'étendant entre deux points par lesquels elle est fixée. On entend par absorbeur tout moyen ou ensemble de moyens d'absorption d'énergie, capable de consommer de l'énergie pour se déformer, tel que des nids d'abeilles. L'élément transversal supérieur et chacun des jambages verticaux comprennent des moyens d'absorption. Enfin, par « sensiblement toute la surface du radiateur », on entend qu'au moins 90% de la surface du radiateur se trouve dans le flux délimité par l'absorbeur.

Grâce à l'invention, l'absorbeur, agencé en amont du radiateur, délimite un compartiment de guidage de l'air entre la peau de pare-chocs et le radiateur. Comme la partie supérieure de ce compartiment est composée de l'élément transversal, monté sur la poutre, cette dernière ne nuit pas au refroidissement du radiateur, dont toute la surface est alimentée en air du fait qu'il constitue le fond du compartiment de guidage.

En outre, un tel agencement offre une bonne absorption des chocs, du fait que l'absorbeur est monté devant la poutre, tout en autorisant de monter la poutre directement sur les longerons. Grâce à cette configuration, lors d'un choc de type assurance (appelé aussi choc réparabilité, Danner ou AZT), la poutre ne subit pas de déformations permanentes, ce qui crée avec les longerons une cellule de sécurité à l'intérieur de laquelle les pièces ne sont pas impactées. Ainsi, un plus grand nombre de pièces, telles que le radiateur et les ventilateurs, sont protégées et n'ont pas à être remplacées.

Parmi les avantages de l'invention, on peut noter que le nombre de pièces du bloc avant est diminué. En effet, on n'a plus besoin de prévoir de convergents spécifiques d'étanchéité à l'air, leur fonction étant remplie par l'absorbeur. En outre, le montage est simplifié : la gestion des jeux d'obturation entre la peau de pare-chocs et le radiateur est plus facile, les modules de refroidissement et d'absorption du véhicule peuvent être montés ensemble, et la face avant technique est par ailleurs simplifiée : la rigidité apportée par la traverse supérieure contribue à la réduction des mouvements de torsion et permet donc de diminuer les nervures de renfort.

On peut noter également que le radiateur agencé selon l'invention est particulièrement compact, moins haut et plus large que dans l'état de la technique, en particulier en l'absence de platines de support en bout des longerons. Il en ressort qu'il est plus facile de diriger l'air vers toute sa surface, tout en gagnant de l'espace dans le bloc avant. Cette configuration permet d'adapter la largeur des entrées d'air de la peau de pare-chocs à celle du radiateur. Dans ce cas, toute la section de l'entrée d'air est efficace, même aux extrémités latérales, souvent négligées et obturées pour permettre un raccordement avec des convergents latéraux.

Comme le groupe de refroidissement (ventilateur, condenseur, radiateur) est plus compact, il peut se loger en partie sous la poutre chocs, et comme l'absorption d'énergie se fait par les absorbeurs devant la poutre, il est possible de réduire le porte-à-faux du véhicule.

Enfin, le radiateur agencé selon l'invention permet de traiter plus facilement les chocs « hanche », c'est-à-dire que, du fait de sa faible hauteur, il ne constitue plus un point dur haut susceptible de blesser la hanche d'un piéton de taille adulte, et laisse la place pour prévoir des moyens de traitement de ce choc.

### Modes de réalisation particulièrement avantageux

L'ensemble selon l'invention peut comporter l'une ou l'autre des caractéristiques suivantes, prise seule ou en combinaison.
- L'élément transversal supérieur de l'absorbeur comporte des moyens d'écoulement de l'air, agencés pour alimenter un radiateur supérieur prévu au-dessus du radiateur. Ainsi, on peut ne prévoir qu'une seule entrée d'air inférieure visible sur la peau de pare-chocs, tout en alimentant un radiateur supérieur, par exemple un circuit de refroidissement d'un circuit de suralimentation du moteur.
- Les moyens d'écoulement de l'air sont des conduits intégrés dans l'absorbeur et orientés vers le radiateur supérieur.
- L'absorbeur comprend des parois de guidage, constituant les parois du compartiment de guidage, ces parois comprenant des moyens spécifiques de guidage de l'air, par exemple des ailettes ou des déflecteurs.
- L'absorbeur comporte en outre un élément transversal inférieur, agencé à hauteur du tibia d'un piéton adulte. Ainsi, le compartiment de guidage délimité par les moyens d'absorption est fermé, ce qui limite les fuites en amont des échangeurs.
- L'agencement décrit ci-dessus intègre en outre au moins un ventilateur, s'étendant devant ou derrière le radiateur, sensiblement de même hauteur que ce dernier. La largeur du radiateur, plus grande que le diamètre du ou des ventilateurs centraux, permet, lorsque le véhicule roule, de laisser libres les zones latérales du radiateur, et, lorsque le véhicule est à l'arrêt et que le ventilateur fonctionne, de profiter du débit d'air supplémentaire qui pourrait traverser en sens inverse ces mêmes zones latérales. Le ou les ventilateurs centraux peuvent remplacés par deux ventilateurs latéraux.
- L'agencement comprend en outre, en aval du radiateur, une paroi de séparation du flux d'air refoulé du flux d'air aspiré par le ventilateur.

L'invention a également pour objet un absorbeur en matière plastique convenant pour un agencement tel que décrit ci-dessus selon la revendication 8.

### Description d'exemples

Des exemples d'agencements selon l'invention sont illustrés en se référant aux dessins qui ne présentent aucun caractère limitatif, dans lesquels :
- la figure 1 est un schéma de l'agencement selon un premier mode de réalisation de l'invention,
- la figure 2 est une coupe longitudinale d'un agencement selon un second mode de réalisation de l'invention.

| **Référence sur les figures** | **Vocabulaire général** | **Désignation dans l'exemple de réalisation** |
|---|---|---|
| 10 | Radiateur | Radiateur principal inférieur |
| 12 | Absorbeur | Absorbeur en matière plastique, en forme de U à l'envers, composé de nervures disposées en nids d'abeille |
| 14, 24 | Elément transversal supérieur | Traverse supérieure |
| 16 | deux jambages verticaux | |
| 17 | Paroi de guidage de l'absorbeur | Parois intérieures des jambages 16, paroi inférieure de la traverse 14 |
| 17a | Moyens spécifiques de guidage | Déflecteur prolongeant la paroi de guidage 17, orientant l'air vers la surface du radiateur |
| 18 | Poutre de chocs | Poutre rigide, en matière thermoplastique ou en hybride métal-plastique |
| 19 | Face frontale de la poutre | |
| 20 | Longerons | Longerons métalliques principaux du véhicule |
| 21 | Extrémités avant des longerons 20 | |
| 22 | Radiateur supérieur | Radiateur d'air de suralimentation (moteur) |
| 26 | Moyens d'écoulement de l'air | Conduits, formés par des nervures disposées en nids d'abeille, et orientés de façon à guider l'air vers le radiateur supérieur 22 |
| 28 | Ventilateur(s) | Ventilateur(s) disposé(s) devant ou derrière le radiateur 10. |

La poutre 18 est montée directement sur les longerons 20. Le radiateur 10 est positionné en retrait des extrémités 21, de façon à être protégé par la poutre 18 en cas de chocs.

L'absorbeur 12 délimite un compartiment de guidage de l'air vers le radiateur 10. Le guidage est amélioré à l'aide des déflecteurs 17a, qui peuvent prolonger l'absorbeur entre le jambage 16 et le radiateur 10, et ainsi empêcher l'air de s'échapper du flux dirigé vers le radiateur.

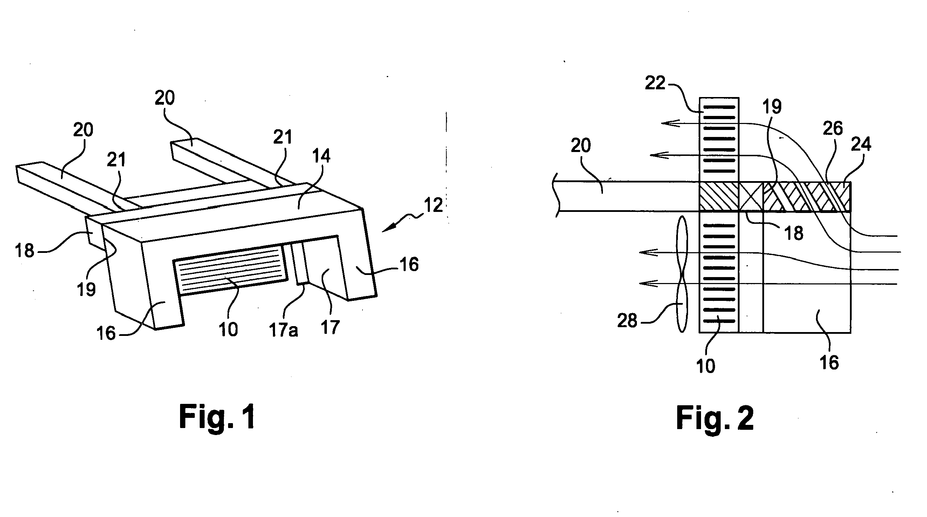

Dans le cas, représenté sur la figure 2, où un radiateur supérieur 22 est monté au-dessus du radiateur inférieur 10, l'absorbeur 12 guide en outre l'air vers ce radiateur supérieur. Il est donc possible de n'avoir qu'une seule entrée d'air inférieure dans la peau de pare-chocs, peu visible, sans entrée d'air supérieure.

On peut prévoir un seul ou deux ventilateurs 28, disposés côte à côte, dont le diamètre est égal à la hauteur du radiateur. On peut noter que ce ou ces ventilateurs de faible hauteur sont protégés lors d'un choc Danner et libèrent de la place dans la partie haute du bloc avant, ce qui permet de réduire le porte-à-faux avant du véhicule. Ainsi, en cas de choc Danner, davantage de pièces sont protégées et n'ont pas à être remplacées.

Grâce à l'invention, toute la surface à refroidir du radiateur 10 est positionnée en-dessous de la poutre 18, si bien que l'air ne rencontre pas de gros obstacle.

## Revendications

1. Ensemble d'un radiateur (10), d'un absorbeur (12) et d'une poutre (18) de chocs pour un véhicule automobile, la poutre ayant une race frontale (19), ensemble dans lequel l'absorbeur comporte un élément transversal supérieur (14) et deux jambages verticaux (16), l'élément transversal supérieur (14) et chacun des jambages verticaux (16) comprennent des moyens d'absorption, l'élément transversal et les jambages sont agencés de façon à guider l'air entrant par l'avant du véhicule vers sensiblement toute la surface du radiateur et de façon à délimiter un compartiment de guidage de l'air entre une peau de pare-chocs du véhicule et le radiateur (10), et l'élément transversal supérieur est monté sur la face frontale de la poutre.

2. Ensemble selon la revendication 1, dans lequel l'élément transversal supérieur comporte des moyens (26) d'écoulement de l'air, agencé pour alimenter un radiateur supérieur (22) prévu au dessus du radiateur.

3. Ensemble selon la revendication 2, dans lequel les moyens d'écoulement de l'air sont des conduits (26) intégrés dans l'absorbeur et orientés vers le radiateur supérieur.

4. Ensemble selon l'une quelconque des revendications 1 à 3, dans lequel l'absorbeur comprend des parois de guidage (17), ces parois comprenant des moyens spécifiques (17a) de guidage de l'air, par exemple une ailette ou un déflecteur.

5. Ensemble selon l'une quelconque des revendications 1 à 4, dans lequel l'absorbeur comporte en outre un élément transversal inférieur, agencé à hauteur du tibia d'un piéton adulte.

6. Ensemble selon l'une quelconque des revendications 1 à 5, et d'au moins un ventilateur (28), dont le diamètre est sensiblement égal à la hauteur du radiateur.

7. Ensemble selon la revendication 6, comportant, en aval du radiateur, une paroi de séparation du flux d'air refoulé du flux d'air aspiré.

8. Absorbeur (12) en matière plastique pour un ensemble selon l'une quelconque des revendications 1 à 7, comportant un élément transversal supérieur (14) et deux jambages verticaux (16), l'élément transversal supérieur (14) et chacun des jambages verticaux (16) comprenant des moyens d'absorption, l'élément transversal et les jambages étant agencés de façon à pouvoir guider l'air entrant par l'avant du véhicule vers sensiblement toute la surface d'un radiateur et à pouvoir délimiter un compartiment de guidage de l'air entre une peau de pare-chocs du véhicule et le radiateur, l'élément transversal supérieur étant agencé pour être monté sur la face frontale d'une poutre de chocs, l'absorbeur comprenant des parois de guidage (17), ces parois comprenant des moyens spécifiques (17a) de guidage de l'air, à savoir une ailette ou un déflecteur.

## Claims

1. Assembly of a radiator (10), an absorber (12), and an impact beam (18) for a motor vehicle, the beam having a front face (19), assembly in which the absorber comprises a top transverse element (14) and two vertical legs (16), the top transverse element (14) and each vertical leg (16) comprise absorption means, the transverse element and the legs are arranged in such a manner as to guide air entering the vehicle from the front substantially towards the entire surface area of the radiator and as to define a compartment for guiding air between a bumper skin of the vehicle and the radiator (10), and the top transverse element is mounted on the front face of the beam.

2. Assembly according to claim 1, wherein the top transverse element includes air flow means (26) arranged to feed a top radiator (22) provided above the radiator.

3. Assembly according to claim 2, wherein the air flow means are ducts (26) incorporated in the absorber and directed towards the top radiator.

4. Assembly according to any one of claims 1 to 3, wherein the absorber includes guide walls, the guide walls including specific air guidance means, e.g., a fin or a deflector.

5. Assembly according to any one of claims 1 to 4, wherein the absorber further includes a bottom transverse element arranged at the height of the tibia of an adult pedestrian.

6. An arrangement according to any one of claims 1 to 5, together with at least one fan, the fan being of a diameter that is substantially equal to the height of the radiator.

7. An arrangement according to claim 6, comprising, downstream from the radiator, a wall for separating the discharged air stream from the sucked-in air stream.

8. Absorber (12) made of plastics material, suitable for an assembly according to any one of claims 1 to 7, comprising a top transverse element (14) and two vertical legs (16), the top transverse element (14) and each vertical leg (16) comprising absorption means, the transverse element and the legs being arranged in such a manner as to guide air entering the vehicle from the front substantially towards the entire surface area of the radiator and as to define a compartment for guiding air between a bumper skin of the vehicle and the radiator, the top transverse element being arranged in such a manner as to be mounted on the front face of an impact beam, the absorber comprising absorber guide walls (17), the walls comprising air specific guide means (17a), e.g., a fin or a deflector.

## Patentansprüche

1. Anordnung eines Kühlers (10), eines Dämpfers (12) und einer Stoßstange (18) für ein Kraftfahrzeug, wobei die Stoßstange eine vordere Fläche (19) aufweist, wobei bei der Anordnung der Dämpfer ein oberes Querelement (14) und zwei vertikale Pfosten (16) umfasst, wobei das obere Querelement (14) und jeder der vertikalen Pfosten (16) Dämpfungsmittel aufweisen, wobei das obere Querelement (14) und jeder der Pfosten(16) Dämpfungsmittel aufweisen und das Querelement und die Pfosten derart angeordnet sind, dass sie die vorne am Fahrzeug einströmende Luft im Wesentlichen zur gesamten Oberfläche des Kühlers leiten, und dass sie ein Führungsabteil für die Luft zwischen einer Stoßdämpferschicht des Fahrzeugs und dem Kühler (10) begrenzen, wobei das obere Querelement an der vorderen Fläche des Stoßdämpfers befestigt ist.

2. Anordnung nach Anspruch 1, bei der das obere Querelement Mittel (26) zur Ableitung der Luft aufweist, die derart vorgesehen sind, dass sie einen oberen Kühler (22) versorgen, der über dem Kühler angeordnet ist.

3. Anordnung nach Anspruch 2, bei der die Luftableitungsmittel Leitungen (26) sind, die in den Dämpfer integriert und zum oberen Kühler gerichtet sind.

4. Anordnung nach einem der Ansprüche 1 bis 3, bei der der Dämpfer Führungswände (17) aufweist, wobei diese Wände spezifische Mittel (17a) zur Führung der Luft umfassen, beispielsweise einen Flügel oder ein Ablenkblech.

5. Anordnung nach einem der Ansprüche 1 bis 4, bei der der Dämpfer ferner ein unteres Querelement aufweist, das auf Höhe des Schienbeins eines erwachsenen Fußgängers angeordnet ist.

6. Anordnung nach einem der Ansprüche 1 bis 5 und mit mindestens einem Ventilator (28), dessen Durchmesser im Wesentlichen gleich der Höhe des Kühlers ist.

7. Anordnung nach Anspruch 6, aufweisend stromabwärts zum Kühler eine Wand zur Trennung des aufgestauten Luftstroms vom angesaugten Luftstrom.

8. Dämpfer (12) aus Kunststoff für eine Anordnung nach einem der Ansprüche 1 bis 7, aufweisend ein oberes Querelement (14) und zwei vertikale Pfosten (16), wobei das obere Querelement (14) und jeder der vertikalen Pfosten (16) Dämpfungsmittel aufweisen, wobei das Querelement und die Pfosten derart angeordnet sind, dass sie die vorne in das Fahrzeug eintretende Luft im Wesentlichen zur gesamten Oberfläche eines Kühlers leiten können und ein Führungsabteil für die Luft zwischen einer Stoßdämpferschicht des Fahrzeugs und dem Kühler begrenzen können, wobei das obere Querelement derart angeordnet ist, dass es auf der vorderen Fläche eines Stoßdämpfers befestigt werden kann, wobei der Dämpfer Führungswände (17) aufweist, wobei diese Wände spezifische Mittel (17a) zur Führung der Luft, nämlich einen Flügel oder ein Ablenkblech, aufweisen.
